# EUROPÄISCHE PATENTSCHRIFT

(11) **EP 3 260 334 B1**
(45) Veröffentlichungstag und Bekanntmachung des Hinweises auf die Patenterteilung: **18.11.2020**
(21) Anmeldenummer: 17175894.9
(22) Anmeldetag: 14.06.2017
(51) Int. Cl.: B60T 7/20, B60T 11/10, B60T 13/08, B60T 17/22

(54) **VERFAHREN ZUM VORBEREITEN EINER ÄNDERUNG EINES BETRIEBSZUSTANDS EINES GESPANNS, FAHRERASSISTENZSYSTEM UND KRAFTFAHRZEUG**
METHOD FOR PREPARING OF A CHANGE TO AN OPERATING STATE OF A VEHICLE COMBINATION, DRIVER ASSISTANCE SYSTEM, AND MOTOR VEHICLE
PROCÉDÉ DE PRÉPARATION D'UNE MODIFICATION D'UN ÉTAT DE FONCTIONNEMENT D'UN ATTELAGE, SYSTÈME D'ASSISTANCE AU CONDUCTEUR ET VÉHICULE AUTOMOBILE

(30) Priorität: 14.06.2016 DE 102016110836
(43) Veröffentlichungstag der Anmeldung: 27.12.2017
(73) Patentinhaber: Valeo Schalter und Sensoren GmbH, 74321 Bietigheim-Bissingen (DE)
(72) Erfinder: Haenisch, Stephan, 74321 Bietigheim-Bissingen (DE)
(74) Vertreter: Pothmann, Karsten

(56) Entgegenhaltungen:
- AT-B- 411 347
- DE-A1-102010 002 652
- DE-A1-102010 053 818
- DE-U1- 20 117 647
- DE-U1-202014 007 029
- DE-U1-202014 007 403

## Beschreibung

Die Erfindung betrifft ein Verfahren zum Vorbereiten einer Änderung eines Betriebszustands eines Gespanns, bei welchem ein Anhänger des Gespanns an einer Anhängerkupplung eines Zugfahrzeugs des Gespanns angekoppelt beziehungsweise angehängt ist. Des Weiteren betrifft die Erfindung auch ein Fahrerassistenzsystem sowie ein Kraftfahrzeug.

Bei Gespannen, die einen Personenkraftwagen und einen daran mittels einer Anhängerkupplung am Kraftfahrzeug angeordneten Anhänger aufweisen, ist es auch bekannt, dass dieser Anhänger eine sogenannte Auflaufbremseinrichtung aufweisen kann. Durch eine derartige Auflaufbremseinrichtung kann in bestimmten Fahrsituationen der Anhänger selbst aktiv abgebremst werden. Das Gespann kann dann sowohl mit der Bremsanlage des Kraftfahrzeugs selbst als auch zusätzlich durch die Auflaufbremseinrichtung des Anhängers abgebremst werden. Die Auflaufbremseinrichtung ist üblicherweise mit einer Deichsel des Anhängers gekoppelt und unterliegt einem mechanischen Wirkprinzip, sodass über eine entsprechende Wirkkette dann die Räder des Anhängers abgebremst werden.

Bei dieser Auflaufbremseinrichtung kann ein gespannter und entspannter Zustand eingestellt sein, wobei im gespannten Zustand eine Bremswirkung auftritt und im entspannten Zustand die Bremswirkung aufgehoben ist.

Beim Abhängen beziehungsweise Abkoppeln des Anhängers von der Anhängerkupplung ist der entspannte Zustand der Auflaufbremseinrichtung erwünscht, um nicht eine unerwünschte Bewegung des Anhängers in Richtung des Zugfahrzeugs und somit auch gegebenenfalls in Richtung einer den gekoppelten Zustand lösenden Person zu bewirken.

In der DE 10 2010 002652 A1 ist ein Verfahren zum Vorbereiten einer Änderung eines Betriebszustands eines Gespanns offenbart, bei dem die Auflaufbremseinrichtung des Fahrzeuganhängers in bestimmten Fahrsituationen deaktiviert oder mit verringerter Bremskraft gebremst werden kann.

Es ist Aufgabe der vorliegenden Erfindung, ein Verfahren sowie ein Fahrerassistenzsystem und ein Kraftfahrzeug zu schaffen, bei welchen die Sicherheit bei einem möglichen Ändern des Betriebszustands eines Gespanns mit einem Zugfahrzeug und einem daran angekoppelten Anhänger verbessert ist.

Diese Aufgabe wird durch ein Verfahren, ein Fahrerassistenzsystem und einem Kraftfahrzeug gemäß den unabhängigen Ansprüchen gelöst.

Bei einem erfindungsgemäßen Verfahren wird ein Vorbereiten einer Änderung eines Betriebszustands eines Gespanns durchgeführt. Ein Anhänger des Gespanns ist an einer Anhängerkupplung eines Zugfahrzeugs des Gespanns angehängt beziehungsweise daran angekoppelt. Dadurch ist ein erster Betriebszustand definiert, der auch einen aktuellen und während dem Vorbereiten einer möglichen Änderung des Betriebszustands des Gespanns vorliegenden Betriebszustand darstellt. Eine anhängerseitig ausgebildete beziehungsweise angeordnete Auflaufbremseinrichtung wird dahingehend überwacht, ob sie in einem gespannten Zustand vorliegt. Es wird somit überwacht, ob eine anhängerseitig angeordnete Auflaufbremseinrichtung abhängig von der Bewegung des Zugfahrzeugs und/oder abhängig von einem Zustand einer Fahrbahn, auf welchem sich das Gespann befindet, in einen gespannten Zustand gebracht wird und insbesondere der Anhänger in dem gespannten Zustand der Auflaufbremseinrichtung abgebremst wird. Der gespannte Zustand der Auflaufbremseinrichtung wird mit einer Sensoreinrichtung des Gespanns erfasst und diese Information des gespannten Zustands wird für das Vorbereiten der Änderung des Betriebszustands des Gespanns berücksichtigt. Bei der Erfindung ist es somit vorgesehen, dass die Auflaufbremseinrichtung bezüglich ihrer möglichen aktuellen Betriebszustände überwacht wird und dann, wenn ein spezifischer Betriebszustand, nämlich der gespannte Betriebszustand vorliegt und erkannt wird, im Weiteren diese Information herangezogen wird, wenn im Nachgang oder auch bereits zu dem Zeitpunkt, zu dem der gespannte Zustand der Auflaufbremseinrichtung erkannt wird, eine Änderung des Betriebszustands des Gespanns zukünftig erwartet wird beziehungsweise herbeigeführt werden soll. Damit wird eine verbesserte Sicherheit bezüglich einer möglichen Änderung des Betriebszustands des Gespanns erreicht. Denn ist dann noch bei einem erwarteten bevorstehenden Wunsch einer Änderung des Betriebszustands des Gespanns, insbesondere bei einem Wechsel von dem angekoppelten Zustand des Anhängers an der Anhängerkupplung in den abgekoppelten Zustand des Anhängers von der Anhängerkupplung, der gespannte Zustand der Auflaufbremseinrichtung vorliegend, können weitere Handlungen durch ein Fahrerassistenzsystem durchgeführt werden, insbesondere vor dem tatsächlichen Ändern des Betriebszustands.

Insbesondere kann dadurch vermieden werden, dass in einem derartigen gespannten Zustand der Auflaufbremseinrichtung dann ein unerwünschtes Abkoppeln des Anhängers von der Anhängerkupplung, insbesondere durch eine Person selbst, durchgeführt wird. Dadurch können unerwünschte Beeinträchtigungen der Person selbst und/oder des Zugfahrzeugs vermieden werden.

Insbesondere wird als aktueller Betriebszustand des Gespanns der angekoppelte Zustand des Anhängers an der Anhängerkupplung eingestellt, und als ein Ändern des Betriebszustands wird ein Abkoppeln des Anhängers von der Anhängerkupplung charakterisiert. Beim Ändern des Betriebszustands wird somit der gekoppelte Zustand des Anhängers an der Anhängerkupplung in den entkoppelten Zustand übergeführt.

Gemäß der Erfindung wird beim Vorbereiten der Änderung des Betriebszustands des Gespanns ein Bevorstehen einer Änderung des Betriebszustands des Gespanns, insbesondere ein bevorstehendes manuelles Ändern des Betriebszustands des Gespanns durch eine Person, durch eine Schätzvorrichtung eines Fahrerassistenzsystems des Gespanns geschätzt. Dies ist eine dahingehend sehr vorteilhafte Ausführung, da aufgrund unterschiedlichster Bewertungskriterien dann mit gewisser Wahrscheinlichkeit durch das Fahrerassistenzsystem beurteilt werden kann, ob nachfolgend, insbesondere innerhalb eines schätzbaren Zeitintervalls, tatsächlich eine Änderung des Betriebszustands des Gespanns und somit insbesondere ein Abkoppeln des Anhängers von der Anhängerkupplung erfolgen wird. Dies ist dahingehend dann vorteilhaft, um in einem erkannten gespannten Zustand der Auflaufbremseinrichtung dann individuelle Handlungen durch das Fahrerassistenzsystem noch vor einem tatsächlich erfolgenden Ändern des Betriebszustands durchführen zu können und in dem Zusammenhang insbesondere auch entsprechende Informationen an eine Person, die ein Ändern des Betriebszustands des Gespanns herbeiführen wird, zu übermitteln. Die Sicherheit ist dadurch nochmals wesentlich erhöht, da eine Person dann auch eindeutig und zeitnah vor einem möglichen Ändern des Betriebszustands des Gespanns auf eine gegebenenfalls nachteilige Situation des aktuellen Betriebszustands des Gespanns hingewiesen werden kann.

Vorzugsweise ist vorgesehen, dass das Schätzen abhängig von einem aktuellen Betriebszustand einer Komponente des Zugfahrzeugs und/oder abhängig von einer aktuellen Änderung eines Betriebszustands einer Komponente des Zugfahrzeugs durchgeführt wird. Damit kann die Schätzgenauigkeit erhöht werden und die Wahrscheinlichkeit, dass ein Ändern des Betriebszustands in absehbarer Zeit tatsächlich bevorsteht, genauer bestimmt werden, sodass dann auch eine Aussage über ein möglicherweise tatsächliches Ändern des Betriebszustands ebenfalls präziser ist. Vorzugsweise werden als Betriebszustand einer Komponente des Zugfahrzeugs ein Öffnen einer Fahrzeugtür des Zugfahrzeugs und/oder ein Stillstand des Zugfahrzeugs ausgewertet. Zusätzlich oder anstatt dazu kann als Betriebszustand einer Komponente des Zugfahrzeugs auch ein Betätigen einer Feststellbremsvorrichtung des Zugfahrzeugs und/oder ein Abstellen einer Antriebseinheit des Zugfahrzeugs und/oder ein Trennen einer elektrischen Steckerverbindung zwischen dem Zugfahrzeug und dem Anhänger ausgewertet werden. Zusätzlich oder anstatt dazu kann auch eine Position einer Person außerhalb des Zugfahrzeugs relativ zu der Anhängerkupplung ausgewertet werden. Dies sind konkrete Betriebszustände einer Komponente eines Fahrzeugs, die erfahrungsgemäß mit individuellen Wahrscheinlichkeiten darauf schließen lassen, dass ein Anhänger, wenn er sich dann noch im angehängten Zustand an der Anhängerkupplung befindet, alsbald auch abgehängt werden könnte.

Die jeweiligen Betriebszustände der Komponente können mit individuellen Sensoren am Zugfahrzeug und/oder am Gespann erfasst werden. In dem Zusammenhang können nicht nur für diese Ausgestaltung beispielsweise Ultraschallsensoren verwendet werden, die insbesondere auch im Heckbereich des Zugfahrzeugs angeordnet sind und beispielsweise einem Fahrerassistenzsystem des Zugfahrzeugs zugeordnet sind, welches auf Basis einer Umfelderfassung beispielsweise auch eine Parklücke erkennt und das Einparken des Zugfahrzeugs in die Parklücke unterstützt.

Es kann jedoch auch vorgesehen sein, dass mit zumindest einer Kamera des Zugfahrzeugs eine Erfassung spezifischer Betriebszustände von Komponenten des Zugfahrzeugs erfasst wird und/oder eine Person außerhalb des Zugfahrzeugs erfasst wird, die sich dann insbesondere im Bereich zwischen dem Zugfahrzeug und dem Anhänger befindet, sodass auch hier dann mit entsprechender Wahrscheinlichkeit auf ein bevorstehendes Ändern des Betriebszustands des Gespanns geschlossen werden kann.

Bei einer vorteilhaften Ausführung wird bei einem Überschreiten eines vorgebbaren Schwellwerts und eines dann noch Vorhandenseins eines gespannten Zustands der Auflaufbremseinrichtung eine Warnung ausgegeben. Dadurch wird mit sehr hoher Sicherheit die Aufmerksamkeit einer Person geweckt, die möglicherweise unmittelbar nachfolgend ein Ändern des Betriebszustands des Gespanns herbeiführen möchte, insbesondere den Anhänger von der Anhängerkupplung abkoppeln möchte. Gerade durch diese Ausgestaltung wird dann die Aufmerksamkeit der Person erweckt, sodass mit hoher Wahrscheinlichkeit das Abkoppeln des Anhängers in dem gespannten Zustand der Auflaufbremseinrichtung verhindert werden kann und somit ein unerwünschtes abruptes nach vorne Setzen des Anhängers in Richtung des Zugfahrzeugs und somit auch in Richtung der Person, die das Abkoppeln vollzieht, verhindert wird.

Insbesondere kann vorgesehen sein, dass die Warnung als akustisches Signal und/oder als optisches Signal erzeugt wird. Beispielsweise kann hier dann eine dafür jeweils geeignete Signalquelle am Zugfahrzeug und/oder an dem Anhänger aktiviert werden. Beispielsweise kann hier eine Hupe des Zugfahrzeugs aktiviert werden. Zusätzlich oder anstatt dazu kann jedoch auch eine optische Anzeige auf einer Anzeigeeinheit des Zugfahrzeugs erfolgen, wobei hier beispielsweise auch ein Anzeigen eines Symbols und/oder von Text erfolgen kann. Eine darüber hinausgehende Signalisierung kann erfolgen, indem diese optische Anzeige blinkt und/oder als Laufschrift dargestellt wird.

Zusätzlich oder anstatt dazu kann auch vorgesehen sein, dass als optische Warnung eine Blinkleuchte des Zugfahrzeugs und/oder eine Blinkleuchte des Anhängers aktiviert wird. Ebenfalls kann beispielsweise eine Aktivierung eines Bremslichts des Zugfahrzeugs erfolgen. Diese externen optischen Signalerzeugungen sind insbesondere dann vorteilhaft, wenn sich eine Person bereits außerhalb des Zugfahrzeugs befindet und somit gegebenenfalls anderweitige Warnungen, die im Inneren des Zugfahrzeugs erzeugt werden, nicht mehr wahrnehmen kann.

Vorzugsweise wird als Warnung ein Weiterfahren des Gespanns bis zu einem Erreichen eines entspannten Zustands der Auflaufbremseinrichtung durch das Fahrerassistenzsystem vorgeschlagen. Damit wird der entspannte Zustand der Auflaufbremseinrichtung durch die Fortbewegung des Gespanns selbst automatisch eingestellt. Dies ist auch dann eine vorteilhafte Ausführung, wenn sich die Person, insbesondere ein Fahrzeugführer, noch im Zugfahrzeug befindet und diese Information, die dann insbesondere auch auf einer Anzeigeeinrichtung optisch angezeigt werden kann, entsprechend wahrnehmen kann.

Bei einer weiteren vorteilhaften Ausführung kann vorgesehen sein, dass als Warnung ein akustisches Signal und/oder ein Symbol und/oder ein Text auf einer Anzeigeeinheit des Zugfahrzeugs optisch angezeigt wird und/oder eine optische Signale aussendende Außeneinrichtung des Zugfahrzeugs und/oder eine optische Signale aussendende Außeneinrichtung des Anhängers aktiviert werden.

In vorteilhafter Weise wird der gespannte Zustand der Auflaufbremseinrichtung abhängig von einem Unterschreiten eines in Richtung einer Längsachse des Gespanns bemessenen Referenzabstands eines Hecks des Zugfahrzeugs zu einer Front des Anhängers durch einen Ist-Abstand erkannt. Eine Auslaufbremseinwirkung arbeitet in vorteilhafter Weise dahingehend, dass dann, wenn sich der Anhänger aufgrund beispielsweise eines Bremsvorgangs des Zugfahrzeugs auf das Zugfahrzeug aufschiebt, über die Deichsel eine Verschiebung einer Zugstange der Auflaufbremseinrichtung bis zu einem Endanschlag einstellt und über diese Verschiebung der Zugstange ein Umlenkhebel der Auflaufbremseinrichtung betätigt wird. Dieser Umlenkhebel ist insbesondere mit einem Bremsgestänge und insbesondere Seilzügen und insbesondere einem Spreizgelenkschloss mit Bremsbacken der Auflaufbremseinrichtung verbunden. Durch die Betätigung des Umlenkhebels werden dann über diese genannte Wirkkette die Bremsbacken an die Bremstrommel der Auflaufbremseinrichtung angedrückt, und die Räder des Anhängers werden dann abgebremst. Dann ist der gespannte Zustand der Auflaufbremseinrichtung erreicht. Damit einhergehend ist dann, wie oben erläutert, jedoch ein Abstand zwischen dem Heck des Zugfahrzeugs und der Front des Anhängers eingestellt, der kleiner einem Referenzabstand ist, wobei bei dem Referenzabstand der entspannte Zustand der Auflaufbremseinrichtung vorliegt. Insbesondere kann diese Abstandserfassung auch wiederum über Sensoren erfolgen, beispielsweise Ultraschallsensoren, die am Heck des Zugfahrzeugs angeordnet sind. Die diesbezügliche Abstandserfassung kann in dem Zusammenhang auch sehr genau erfolgen.

Insbesondere wird diese Abstandserfassung in der Mitte des Gespanns vollzogen und somit auf der Längsachse, die in Verlängerung zwischen der feststehenden Anhängerkupplung am Heck des Zugfahrzeugs in Richtung der Deichsel und somit des Anhängers gerichtet ist.

Bei einer weiteren vorteilhaften Ausführung wird vorgesehen, dass der gespannte Zustand der Auflaufbremseinrichtung abhängig von einem vorhergehenden Bremsvorgang des Zugfahrzeugs und/oder einer Neigung der Fahrbahn und/oder einer Neigungsrichtung der Fahrbahn in Bezug zur Fortbewegungsrichtung des Gespanns erkannt wird. Tritt daher beispielsweise bei einem letzten vorhergehenden Bremsvorgang eine negative Beschleunigung und somit eine Bremskraft auf, die größer einem Bremskraftschwellwert ist, so erfolgt wiederum ein Auflaufen des Anhängers auf das Zugfahrzeug, und das Auslösen der Auflaufbremseinrichtung bezüglich des Einstellens des dann gespannten Zustands, wie dies oben erläutert wurde, tritt auf. Dies kann beispielsweise dann der Fall sein, wenn sich das Gespann auf horizontal orientierter Fahrbahn oder nur gering geneigter Fahrbahn bewegt.

Bewegt sich das Gespann in einem relativ starken Gefälle, so schiebt der Anhänger im entspannten Zustand der Auflaufbremseinrichtung ohnehin bereits stärker gegen das Zugfahrzeug, und in einer derartigen Situation kann dann das Aktivieren der Auflaufbremseinrichtung und somit das Einstellen des gespannten Zustands auch bereits bei einem kleineren Bremskraftschwellwert erfolgen. Dies vor dem Hintergrund, da aufgrund des Gefälles die Gewichtskraft des Anhängers ohnehin bereits in Richtung des Zugfahrzeugs schiebt und dann in dem Falle durch eine geringere Bremskraft des Zugfahrzeugs der die Auflaufbremseinrichtung im Hinblick auf das Einstellen des gespannten Zustands beschreibende Schwellwert erreicht wird. Demgegenüber wird bei Steigungen, die das Gespann befährt und somit bei Fortbewegungen, bei denen das Gespann bergauf fährt, ein Auslösen der Auflaufbremseinrichtung bezüglich des Einstellens des gespannten Zustands bei einem erst dann noch größeren Schwellwert der Bremskraft ausgelöst, da bei diesem Bergauffahren der Anhänger nicht in Richtung des Zugfahrzeugs schiebt, sondern sich aufgrund seiner Gewichtskraft von dem Zugfahrzeug weg bewegen möchte.

Die diesbezüglichen Ausgestaltungen und in dem Zusammenhang individuelle Neigungen der Fahrbahn und auch Neigungsrichtungen der Fahrbahn können wieder über Sensoren am Gespann erfasst werden. Beispielsweise können auch hier Radsensoren und/oder Beschleunigungssensoren und/oder Neigungssensoren vorhanden sein.

In einer weiteren vorteilhaften Ausführung wird der gespannte Zustand der Auflaufbremseinrichtung und in dem Zusammenhang auch dann der angehängte Zustand des Anhängers an der Anhängerkupplung abhängig von einer Impulswirkung des Anhängers auf die Anhängerkupplung erkannt. Dies bedeutet beispielsweise auch, dass dann bei einem relativ abrupten Pulseinwirken des Anhängers auf das Zugfahrzeug, wie es beispielsweise bei einem relativ starken Abbremsen des Zugfahrzeugs aufgrund der Massenträgheit des Anhängers dann erfolgt, auch erkannt wird, dass dann der gespannte Zustand der Auflaufbremseinrichtung eingestellt ist, da ein Überschreiten eines vorgebbaren Referenzimpulsschwellwerts durch einen aktuellen Ist-Impuls erfolgt ist.

Allgemein wird somit bei dem erfindungsgemäßen Verfahren insbesondere beispielsweise anhand einer letzten vorhergehenden Bewegung des Zugfahrzeugs beziehungsweise des gesamten Gespanns bestimmt, ob potentiell ein verspannter Zustand der Auflaufbremseinrichtung vorliegt. Aus diesen Informationen können dann Handlungen abgeleitet werden, um gegebenenfalls sicher zu verhindern, dass in diesem gespannten Zustand der Auflaufbremseinrichtung dann tatsächlich ein Ändern des Betriebszustands des Gespanns durchgeführt wird, insbesondere ein Abkoppeln des Anhängers von der Anhängerkupplung durch eine Person durchgeführt wird.

Insbesondere ist somit ein mehrstufiges Verfahren vorgesehen, bei welchem beispielsweise Informationen aus der Fahrzeugelektronik erfasst werden und abhängig davon insbesondere bestimmt wird, ob überhaupt ein Anhänger an der Anhängerkupplung angehängt ist. Beispielsweise kann dies über eine Widerstandsmessung einer Beleuchtungseinrichtung am Anhänger beziehungsweise über einen Schalter am Anhänger erfasst werden. Kann eine derartige Bestimmung, ob ein Anhänger an der Anhängerkupplung vorhanden ist, nicht erfolgen, kann auch über eine Bewegungskurve des Zugfahrzeugs und/oder eine Impulsbestimmung, die von einem Anhänger auf das Zugfahrzeug ausgeübt werden würde, ein derartiger angehängter oder nicht angehängter Zustand erkannt werden. Tritt beispielsweise bei einer relativ gleichmäßigen Beschleunigung ein abrupter Rruck auf die Anhängerkupplung und somit auf das Zugfahrzeug auf, so kann darauf geschlossen werden, dass dann ein Anhänger an der Anhängerkupplung angehängt ist.

Insbesondere kann, wenn ein angehängter Anhänger erkannt wird, aufgrund unterschiedlichster Möglichkeiten dann ein gespannter Zustand der Auflaufbremseinrichtung bestimmt werden. Beispielsweise kann dann anhand eines letzten vorhergehenden Bremsvorgangs ermittelt werden, ob die Beschleunigung, die das Gespann dann erfahren hat, ausreicht, um die Auflaufbremseinrichtung des Anhängers auszulösen und somit den gespannten Zustand der Auflaufbremseinrichtung einzustellen. Eine derartige Bestimmung einer möglichen Bremsung kann beispielsweise auch als Funktion abhängig von der Zeit und/oder der Beschleunigung des Zugfahrzeugs und/oder der Bremskraft des Zugfahrzeugs und/oder der Geschwindigkeit des Zugfahrzeugs und/oder einem Gefälle und/oder einer Steigung bestimmt werden. Übersteigt diese Funktion einen vorgegebenen Erfahrungswert beziehungsweise einen vorgegebenen Schwellwert für einen normalen Bremsvorgang, der insbesondere definiert werden kann, insbesondere deutlich, oder wurde ein entsprechender Impuls des Anhängers detektiert, so kann mit entsprechender Wahrscheinlichkeit auf einen verspannten Zustand der Auflaufbremseinrichtung und somit auf eine Verspannung zwischen dem Anhänger und dem Zugfahrzeug geschlossen werden.

Wird im Weiteren bei der Vorbereitung einer möglichen Änderung des Betriebszustands dann nach diesem Erkennen, insbesondere Schätzen, eines gespannten Zustands der Auflaufbremseinrichtung eine positive Beschleunigung des Zugfahrzeugs mit einer Ist-Beschleunigung, die größer einem Beschleunigungsgrenzwert ist, detektiert, so kann dann wiederum abhängig davon darauf geschlossen werden, dass sich der gespannte Zustand der Auflaufbremseinrichtung gelöst hat und sich der entspannte Zustand eingestellt hat. Ist dies erfolgt, bevor die Änderung des Betriebszustands im Hinblick auf das zeitliche Bevorstehen bereits als kritischer eingestuft wurde, so kann in dem Zusammenhang dann beispielsweise auch ein Warnen unterlassen werden.

Gerade auch ein in der Zukunft liegender tatsächlicher Zeitpunkt des Änderns des Betriebszustands des Gespanns kann dann ebenfalls wiederum abgeschätzt werden, wobei hier insbesondere die bereits als vorteilhafte Ausführungen genannten Überwachungen der Betriebszustände einer Komponente oder aktuelle Änderungen eines Betriebszustands einer derartigen Komponente genannt werden können.

Ausführungsbeispiele der Erfindung werden nachfolgend anhand schematischer Zeichnungen näher erläutert.

Dabei zeigen:
- Fig. 1: eine schematische Darstellung eines Ausführungsbeispiels eines erfindungsgemäßen Kraftfahrzeugs, welches Bestandteil eines Gespanns ist; und
- Fig. 2: eine schematische Darstellung eines Ablaufdiagramms im Hinblick auf die Verfahrensschritte beim Vorbereiten einer Änderung eines Betriebszustands des Gespanns.

In den Figuren werden gleiche oder funktionsgleiche Elemente mit den gleichen Bezugszeichen versehen.

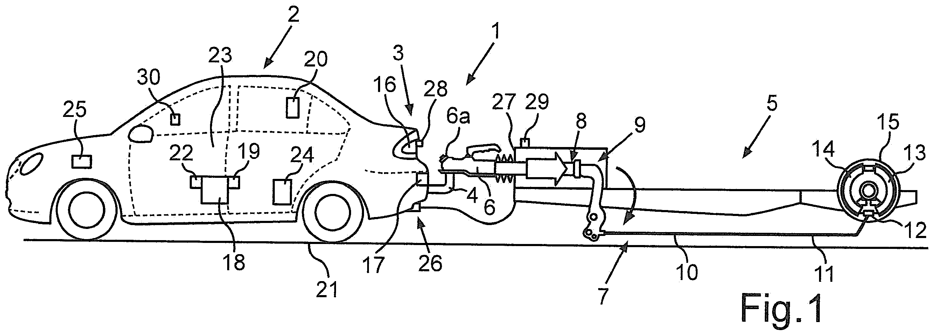

In Fig. 1 ist in schematischer Darstellung ein Gespann 1 gezeigt, welches ein Kraftfahrzeug aufweist, insbesondere einen Personenkraftwagen, der als Zugfahrzeug 2 des Gespanns 1 fungiert. Das Zugfahrzeug 2 weist an einem Heck 3 eine Anhängerkupplung 4 auf. Die im angehängten Zustand eines Anhängers 5, der in Fig. 1 nur sehr schematisch und nur mit Teilkomponenten gezeigt ist, an dem Zugfahrzeug 2 feststehende Anhängerkupplung 4 weist einen L-artigen Bügel auf, an dem ein Kupplungskopf angeordnet ist. Über diesen Kupplungskopf taucht eine Kupplungspfanne 6a über, die in eine Deichsel 6 des Anhängers 5 integriert ist. Der Anhänger 5 umfasst darüber hinaus eine Auflaufbremseinrichtung 7, die eine Zugstange 8 aufweist, die in horizontaler Richtung verschiebbar gelagert ist. Darüber hinaus umfasst die Auflaufbremseinrichtung 7 einen Umlenkhebel 9, der mit der Zugstange 8 koppelbar ist.

Der Umlenkhebel 9 ist schwenkbar gelagert und mit einem Bremsgestänge 10 verbunden. Das Bremsgestänge 10 ist mit einem Seilzug 11 verbunden, wobei dieser Seilzug 11 wiederum mit einem Schloss 12, insbesondere einem Spreizgelenkschloss, verbunden ist. Mit dem Spreizgelenkschloss 12 sind Bremsbacken 13 und 14 gekoppelt, sodass diese abhängig von dieser mechanischen Wirkkette dann gegen eine Bremstrommel 15 gedrückt werden können. Im angedrückten Zustand der Bremsbacken 13 und 14 an die Bremstrommel 15 ist der gespannte Zustand der Auflaufbremseinrichtung 7 eingestellt, anderweitig ist der entspannte Zustand vorliegend.

Am Heck 3 des Zugfahrzeugs 2 ist auch zumindest eine optische Signale aussendende Außeneinrichtung 16 angeordnet, welche beispielsweise ein Rückfahrlicht und/oder ein Blinklicht und/oder ein Bremslicht sein kann.

Darüber hinaus sind an dem Heck 3 vorzugsweise mehrere Sensoren 17 angeordnet, welche zur Umfelderfassung des Zugfahrzeugs 2 ausgebildet sind. Die Sensoren 17 können beispielsweise Ultraschallsensoren sein. Sie sind einem Fahrerassistenzsystem 18 des Zugfahrzeugs 2 zugeordnet, wobei das Fahrerassistenzsystem 18 beispielsweise ein Parkassistenzsystem sein kann.

Das Fahrerassistenzsystem 18 umfasst darüber hinaus eine Steuereinheit 19, mittels welcher eine Verarbeitung der Informationen zumindest der Sensoren 17 und/oder zumindest einer Kamera 20 und/oder einer Kamera 28, die am Zugfahrzeug 2 angeordnet ist bzw. sind und ebenfalls zur Umfelderfassung angeordnet ist bzw. sind, erfolgt. Das Gespann 1 ist auf einer Fahrbahn 21 angeordnet und kann sich dort entsprechend fortbewegen.

Das Fahrerassistenzsystem 18 ist dahingehend ausgebildet, ein Verfahren zum Vorbereiten einer Änderung eines Betriebszustands des Gespanns 1 zu überwachen und durchzuführen.

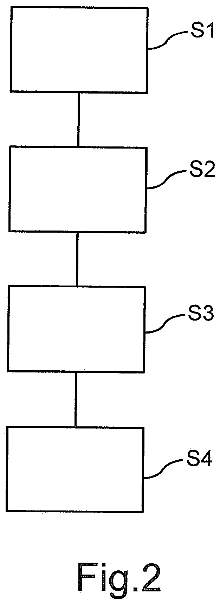

Dazu wird gemäß der vereinfachten Darstellung des Ablaufdiagramms in Fig. 2 zunächst überprüft, ob der Anhänger 5 an der Anhängerkupplung 4 angehängt ist. Dies kann auch über die Sensoren 17 und/oder die Kamera 20 und/oder der Kamera 28 erfolgen. Zusätzlich oder anstatt dazu kann dies jedoch auch anderweitig indirekt erfolgen. Beispielsweise kann dies anhand spezifischer Parameter, die aus der Fahrzeugelektronik hervorgehen beziehungsweise ausgewertet werden können, erfasst werden. Beispielsweise kann hier eine Widerstandsmessung einer Beleuchtungsvorrichtung 29 des Anhängers 5 durchgeführt werden. Die Position und Ausgestaltung der Beleuchtungsvorrichtung 29 ist lediglich symbolhaft zu verstehen. Auch kann zusätzlich oder anstatt dazu die Beurteilung, ob der Anhänger 5 an der Anhängerkupplung 4 angehängt ist, über eine Bewegungskurve des Zugfahrzeugs 2 und/oder über einen Impuls, den der Anhänger 5 auf das Zugfahrzeug 2 ausübt, übermittelt werden.

Dies erfolgt gemäß einem Schritt S1, wie es in Fig. 2 dargestellt ist.

Bei dem Verfahren zum Vorbereiten einer Änderung eines Betriebszustands des Gespanns 2 wird dann überprüft, ob in dem erkannten angehängten Zustand des Anhängers 5 an der Anhängerkupplung 4 gemäß dem Schritt S2 ein gespannter Zustand der Auflaufbremseinrichtung 7 vorliegt. Ist ein derartiger gespannter Zustand der Auflaufbremseinrichtung 7 erkannt, insbesondere über eine Sensoreinrichtung des Gespanns 1 erkannt, wird diese Information für das Vorbereiten der Änderung des Betriebszustands des Gespanns 1 berücksichtigt. Dies bedeutet insbesondere, dass dann, wenn ein gespannter Zustand der Auflaufbremseinrichtung 7 erkannt wurde und zusätzlich dann auch noch durch das Fahrerassistenzsystem 18 erkannt wird, dass eine Änderung eines Betriebszustands des Gespanns 1 auftreten wird, insbesondere ein Abkoppeln des Anhängers 5 von der Anhängerkupplung 4 in absehbarer Zeit mit entsprechender Wahrscheinlichkeit auftreten wird, dass dann eine Warnung ausgegeben wird.

Gemäß einem Schritt S3 wird somit in dem Zusammenhang dann insbesondere ab dem Zeitpunkt, ab dem ein gespannter Zustand der Auflaufbremseinrichtung 7 erkannt wurde, abgeschätzt, ob in absehbarer Zeit, insbesondere innerhalb eines ebenfalls abschätzbaren Zeitintervalls, ein Abhängen des Anhängers 5 von der Anhängerkupplung 4 zu erwarten ist. Dazu wird bei diesem Schritt S3 beim Vorbereiten der Änderung des Betriebszustands ein derartiges Bevorstehen einer Änderung des Betriebszustands des Gespanns 1, insbesondere ein bevorstehendes manuelles Herbeiführen dieser Änderung des Gespanns 1 durch eine Person, durch eine Schätzvorrichtung 22 die Wahrscheinlichkeit des Änderns des Betriebszustands innerhalb des nachfolgenden Zeitintervalls geschätzt. Das Schätzen kann dabei abhängig von einem aktuellen Betriebszustand einer Komponente des Zugfahrzeugs 2 und/oder abhängig von einer aktuellen Änderung eines Betriebszustands einer Komponente des Zugfahrzeugs 2 durchgeführt werden. Beispielsweise kann hier als Betriebszustand einer derartigen Komponente ein Öffnen einer Fahrzeugtür 23 des Zugfahrzeugs 2 und/oder ein Stillstehen des Zugfahrzeugs 2 und/oder ein Betätigen einer Feststellbremsvorrichtung 24 des Zugfahrzeugs 2 und/oder ein Abstellen einer Antriebseinheit 25 des Zugfahrzeugs 2 und/oder ein Trennen einer elektrischen Steckverbindung 26 zwischen dem Zugfahrzeug 2 und dem Anhänger 5 und/oder eine Position einer Person relativ zu der Anhängerkupplung 4 ausgewertet werden.

Beim Überschreiten eines Schätzschwellwerts und eines dann noch Vorhandenseins eines gespannten Zustands der Auflaufbremseinrichtung 7 wird dann gemäß dem Schritt S4 insbesondere eine Warnung ausgegeben. Dies kann akustisch und/oder optisch erfolgen. Dazu kann eine Information auf einer Anzeigeeinheit 30 des Zugfahrzeugs 2 erfolgen. Es kann die Hupe aktiviert werden und/oder ein anderes akustisches Signal im Fahrgastraum des Zugsfahrzeugs 2 erzeugt werden.

Die Art des Warnens und/oder mit welcher Signalkomponente das Warnen erfolgt, kann allgemein zusätzlich oder anstatt dazu auch abhängig von der aktuellen Position einer Person erfolgen, die sich im Fahrgastraum aufhält oder aufgehalten hat, und/oder abhängig von einer Person, beispielsweise einer aus dem Fahrgastraum ausgestiegenen Person oder auch einer Person zusätzlich zu den Personen im Fahrgastraum, erfolgen, die sich der Anhängerkupplung 4 nähert.

Als Warnung kann auch ein Weiterfahren des Gespanns 2 bis zu einem Erreichen eines entspannten Zustands der Auflaufbremseinrichtung 7 durch das Fahrerassistenzsystem 18 vorgeschlagen werden.

Der gespannte Zustand der Auflaufbremseinrichtung 7 kann auch abhängig von einem Unterschreiten eines in Richtung einer horizontalen Längsachse des Gespanns 2 bemessenen Referenzabstands eines Hecks 3 des Zugfahrzeugs 2 zu einer Front 27 des Anhängers 5 durch einen aktuellen Ist-Abstand erkannt werden. Insbesondere kann dieser Ist-Abstand durch eine Sensoreinrichtung, insbesondere die Sensoren 17, die vorzugsweise Ultraschallsensoren sind, gemessen werden.

Zusätzlich oder anstatt dazu kann der gespannte Zustand der Auflaufbremseinrichtung 7 auch abhängig von einem letzten zeitlich in der Vergangenheit liegenden Bremsvorgang des Zugfahrzeugs 2 und/oder einer Neigung der Fahrbahn 21 und/oder einer Neigungsrichtung der Fahrbahn 21 in Bezug zur aktuellen Fortbewegungsrichtung des Gespanns 1 erkannt werden. Auch kann der gespannte Zustand der Auflaufbremseinrichtung 7 zusätzlich oder anstatt dazu abhängig von einer Impulseinwirkung des Anhängers 5 auf die Anhängerkupplung 4 erkannt werden, wobei hier insbesondere jeweils ein entsprechendes Erkennen dahingehend erfolgen kann, dass vorgegebene Schwellwerte durch die aktuellen Ist-Werte überschritten werden.

## Patentansprüche

1. Verfahren zum Vorbereiten einer Änderung eines Betriebszustands eines Gespanns (1), bei welchem als aktueller Betriebszustand des Gespanns (1) ein Anhänger (5) des Gespanns (1) an einer Anhängerkupplung (4) eines Zugfahrzeugs (2) des Gespanns (1) angekoppelt ist, und eine anhängerseitig angeordnete Auflaufbremseinrichtung (7) abhängig von der Bewegung des Zugfahrzeugs (2) und/oder eines Zustands einer Fahrbahn (21), auf welchem sich das Gespann (1) befindet, in einen eine Bremswirkung auf den Anhänger (5) erzeugenden gespannten Zustand gebracht werden kann, wobei der Zustand der Auflaufbremseinrichtung (7) überwacht und mit einer Sensoreinrichtung (17, 20, 28) des Gespanns (1) erfasst wird und bei einem Erkennen eines gespannten Zustands der Auflaufbremseinrichtung (7) diese Information des gespannten Zustand für das Vorbereiten der Änderung des Betriebszustands des Gespanns (1) berücksichtigt wird, **dadurch gekennzeichnet, dass** beim Vorbereiten der Änderung des Betriebszustands ein Bevorstehen einer Änderung des Betriebszustands des Gespanns (1) innerhalb einem nachfolgenden Zeitintervall durch eine Schätzvorrichtung (22) des Gespanns (1) geschätzt wird.

2. Verfahren nach Anspruch 1,
**dadurch gekennzeichnet, dass**
als ein Ändern des Betriebszustands ein Abkoppeln des Anhängers (5) von der Anhängerkupplung (4) charakterisiert wird.

3. Verfahren nach Anspruch 1 oder 2,
**dadurch gekennzeichnet, dass**
beim Vorbereiten der Änderung des Betriebszustands ein Bevorstehen einer Änderung des Betriebszustands des Gespanns (1) ein bevorstehendes manuelles Herbeiführen des Betriebszustands des Gespanns (1) durch eine Person innerhalb einem nachfolgenden Zeitintervall durch eine Schätzvorrichtung (22) des Gespanns (1) geschätzt wird.

4. Verfahren nach Anspruch 3,
**dadurch gekennzeichnet, dass**
das Schätzen abhängig von einem aktuellen Betriebszustand einer Komponente der Zugfahrzeugs (2) und/oder von einer aktuellen Änderung eines Betriebszustands einer Komponenten des Zugfahrzeugs (2) durchgeführt wird.

5. Verfahren nach Anspruch 4,
**dadurch gekennzeichnet, dass**
als Betriebszustand einer Komponente ein Öffnen einer Fahrzeugtür (23) des Zugfahrzeugs (2) und/oder ein Stillstand des Zugfahrzeugs (2) und/oder ein Betätigen einer Feststellbremsvorrichtung (24) des Zugfahrzeugs (2) und/oder ein Abstellen einer Antriebseinheit (25) des Zugfahrzeugs (2) und/oder ein Trennen einer elektrischen Steckerverbindung (26) zwischen dem Zugfahrzeug (2) und dem Anhänger (5) ausgewertet wird.

6. Verfahren nach einem der Ansprüche 3 bis 5,
**dadurch gekennzeichnet, dass**
das Schätzen abhängig von einer Position einer Person relativ zu der Anhängerkupplung (4) erfolgt.

7. Verfahren nach einem der Ansprüche 3 bis 6,
**dadurch gekennzeichnet, dass**
bei einem Überschreiten eines Schätzschwellwerts und eines dann noch Vorhandensein eines gespannten Zustands der Auflaufbremseinrichtung (7) eine Warnung ausgegeben wird.

8. Verfahren nach Anspruch 7,
**dadurch gekennzeichnet, dass**
als Warnung ein Weiterfahren des Gespanns (1) bis zu einem Erreichen eines entspannten Zustands der Auflaufbremseinrichtung (7) vorgeschlagen wird.

9. Verfahren nach Anspruch 7 oder 8,
**dadurch gekennzeichnet, dass**
als Warnung ein akustisches Signal und/oder eine Symbol und/oder ein Text auf einer Anzeigeeinheit (30) des Zugfahrzeugs (2) angezeigt wird und/oder eine optische Signale aussendende Außeneinrichtung (16) des Zugfahrzeugs (2) und/oder eine optische Signale aussendende Außeneinrichtung (29) des Anhängers (5) aktiviert wird.

10. Verfahren nach einem der vorhergehenden Ansprüche,
**dadurch gekennzeichnet, dass**
der gespannte Zustand der Auflaufbremseinrichtung (7) abhängig von einem Unterschreiten eines in Richtung einer Längsachse des Gespanns (1) bemessenen Referenzabstands eines Hecks (3) des Zugfahrzeugs (2) zu einer Front (27) des Anhängers (5) durch einen Ist-Abstand erkannt wird.

11. Verfahren nach Anspruch 10,
**dadurch gekennzeichnet, dass**
dieser Ist-Abstand durch eine Zugfahrzeugseitige Sensoreinrichtung (17, 20, 28), insbesondere eine Ultraschall-Sensoreinrichtung, gemessen wird.

12. Verfahren nach einem der vorhergehenden Ansprüche,
**dadurch gekennzeichnet, dass**
der gespannte Zustand der Auflaufbremseinrichtung (7) abhängig von einem vorhergehenden Bremsvorgang des Zugfahrzeugs (2) und/oder einer Neigung der Fahrbahn (21) und/oder einer Neigungsrichtung in Bezug zur Fortbewegungsrichtung des Gespanns (1) erkannt wird.

13. Verfahren nach einem der vorhergehenden Ansprüche,
**dadurch gekennzeichnet, dass**
der gespannte Zustand der Auflaufbremseinrichtung (7) abhängig von einer Impulseinwirkung des Anhängers (5) auf die Anhängerkupplung (4) erkannt wird.

14. Fahrerassistenzsystem (18) mit zumindest einer Sensoreinrichtung (17, 20, 28) und einer Steuereinheit (19) zur Auswertung der Informationen der Sensoreinrichtung (17, 20, 28), welches zum Durchführen eines Verfahrens nach einem der vorhergehenden Ansprüche ausgebildet ist.

15. Fahrzeug (2) mit einem Fahrerassistenzsystem (18) nach Anspruch 14.

## Claims

1. Method for preparing a change to an operating state of a vehicle combination (1), in which a trailer (5) of the vehicle combination (1) is coupled, as a current operating state of the vehicle combination (1), to a trailer hitch (4) of a tractor vehicle (2) of the vehicle combination (1), an overrun brake device (7) arranged on a trailer side can be changed, as a function of the movement of the tractor vehicle (2) and/or of a state of a roadway (21) on which the vehicle combination (1) is located, in a tensioned state which generates a braking effect on the trailer (5), wherein the state of the overrun brake device (7) is monitored and is sensed with a sensor device (17, 20, 28) of the vehicle combination (1), and when a tensioned state of the overrun brake device (7) is detected this information of the tensioned state is taken into account in preparing to change the operating state of the vehicle combination (1),
**characterized in that**
when the changing of the operating state is prepared, an imminence of changing of the operating state of the vehicle combination (1) within a subsequent time interval is estimated by an estimation device (22) of the vehicle combination (1) .

2. Method according to Claim 1,
**characterized in that**
uncoupling of the trailer (5) from the trailer hitch (4) is characterized as changing of the operating state.

3. Method according to Claim 1 or 2,
**characterized in that**
when the changing of the operating state is prepared, an imminence of changing of the operating state of the vehicle combination (1), an imminent manual initiation of the operating state of the vehicle combination (1) by a person within a subsequent time interval is estimated by an estimation device (22) of the vehicle combination (1) .

4. Method according to Claim 3,
**characterized in that**
the estimation is carried out in accordance with a current operating state of a component of the tractor vehicle (2) and/or in accordance with a current change to an operating state of a component of the tractor vehicle (2).

5. Method according to Claim 4,
**characterized in that**
opening of a vehicle door (23) of the tractor vehicle (2) and/or a stationary state of the tractor vehicle (2) and/or activation of a parking brake device (24) of the tractor vehicle (2) and/or shutting down of the drive unit (25) of the tractor vehicle (2) and/or disconnection of an electric plug connection (26) between the tractor vehicle (2) and the trailer (5) are/is evaluated as an operating state of a component.

6. Method according to one of Claims 3 to 5, **characterized in that**
the estimation is carried out as a function of a position of a person relative to the trailer hitch (4) .

7. Method according to one of Claims 3 to 6, **characterized in that**
when an estimation of a threshold value and a still present tensioned state of the overrun brake device (7) is exceeded, a warning is output.

8. Method according to Claim 7,
**characterized in that**
continued travel of the vehicle combination (1) until a non-tensioned state of the overrun brake device (7) is reached is proposed as a warning.

9. Method according to Claim 7 or 8,
**characterized in that**
an acoustic signal and/or a symbol and/or a text on a display unit (30) of the tractor vehicle (2) is displayed as a warning and/or an external device (16), which emits optical signals, of the tractor vehicle (2) and/or an external device (29), which emits optical signals, of the trailer (5) are/is activated.

10. Method according to one of the preceding claims, **characterized in that**
the tensioned state of the overrun brake device (7) is detected as a function of a reference distance of a rear part (3) of the tractor vehicle (2) from a front part (27) of the trailer (5) being undershot by an actual distance, said reference distance being measured in the direction of a longitudinal axis of the vehicle combination (1).

11. Method according to Claim 10,
**characterized in that**
this actual distance is measured by a tractor-vehicle-side sensor device (17, 20, 28), in particular an ultrasonic sensor device.

12. Method according to one of the preceding claims, **characterized in that**
the tensioned state of the overrun brake device (7) is detected as a function of a preceding braking process of the tractor vehicle (2) and/or an inclination of the roadway (21) and/or a direction of inclination with respect to the direction of locomotion of the vehicle combination (1).

13. Method according to one of the preceding claims, **characterized in that**
the tensioned state of the overrun brake device (7) is detected as a function of a momentum effect of the trailer (5) on the trailer hitch (4).

14. Driver assistance system (18) having at least one sensor device (17, 20, 28) and a control unit (19) for evaluating the information of the sensor device (17, 20, 28), which system is designed to carry out a method according to one of the preceding claims.

15. The vehicle (2) having a driver assistance system (18) according to Claim 14.

## Revendications

1. Procédé de préparation d'une modification d'un état opérationnel d'un attelage (1), avec lequel, comme état opérationnel actuel de l'attelage (1), une remorque (5) de l'attelage (1) est accouplée à une attache de remorque (4) d'un véhicule tracteur (2) de l'attelage (1) et un dispositif de frein de démarrage (7) disposé du côté de la remorque peut être amené, en fonction du mouvement du véhicule tracteur (2) et/ou d'un état d'une voie de circulation (21) sur laquelle se trouve l'attelage (1), dans un état serré qui génère un effet de freinage sur la remorque (5), l'état du dispositif de frein de démarrage (7) étant surveillé et détecté avec un dispositif capteur (17, 20, 28) de l'attelage (1) et, lors d'une reconnaissance d'un état serré du dispositif de frein de démarrage (7), cette information de l'état serré est prise en compte pour la préparation de la modification de l'état opérationnel de l'attelage (1), **caractérisé en ce que** lors de la préparation de la modification de l'état opérationnel, une imminence d'une modification de l'état opérationnel de l'attelage (1) au sein d'un intervalle de temps suivant est estimée par un arrangement d'estimation (22) de l'attelage (1).

2. Procédé selon la revendication 1, **caractérisé en ce qu'**un désaccouplement de la remorque (5) de l'attache de remorque (4) est caractérisé comme une modification de l'état opérationnel.

3. Procédé selon la revendication 1 ou 2, **caractérisé en ce que** lors de la préparation de la modification de l'état opérationnel, une imminence d'une modification de l'état opérationnel de l'attelage (1), une action de provoquer manuellement l'état opérationnel de l'attelage (1) par une personne au sein d'un intervalle de temps suivant est estimée par un arrangement d'estimation (22) de l'attelage (1).

4. Procédé selon la revendication 3, **caractérisé en ce que** l'estimation est effectuée en fonction d'un état opérationnel actuel d'un composant du véhicule tracteur (2) et/ou d'une modification actuelle d'un état opérationnel actuel d'un composant du véhicule tracteur (2) .

5. Procédé selon la revendication 4, **caractérisé en ce que** l'état opérationnel d'un composant interprété est une ouverture d'une portière de véhicule (23) du véhicule tracteur (2) et/ou une immobilisation du véhicule tracteur (2) et/ou un actionnement d'un arrangement de frein de stationnement (24) du véhicule tracteur (2) et/ou un arrêt d'une unité de propulsion (25) du véhicule tracteur (2) et/ou une déconnexion d'une liaison par fiche électrique (26) entre le véhicule tracteur (2) et la remorque (5).

6. Procédé selon l'une des revendications 3 à 5, **caractérisé en ce que** l'estimation est effectuée en fonction d'une position d'une personne par rapport à l'attache de remorque (4).

7. Procédé selon l'une des revendications 3 à 6, **caractérisé en ce qu'**une alerte est délivrée en cas de dépassement d'une valeur de seuil d'estimation et d'un état serré du dispositif de frein de démarrage (7) qui est alors encore présent.

8. Procédé selon la revendication 7, **caractérisé en ce que** l'alerte est une suggestion de poursuivre un déplacement de l'attelage (1) jusqu'à atteindre un état desserré du dispositif de frein de démarrage (7).

9. Procédé selon la revendication 7 ou 8, **caractérisé en ce que** l'alerte est l'affichage d'un signal sonore et/ou d'un symbole et/ou d'un texte sur une unité d'affichage (30) du véhicule tracteur (2) et/ou l'activation d'un dispositif externe (16) du véhicule tracteur (2) qui émet un signal visuel et/ou d'un dispositif externe (29) de la remorque (5) qui émet un signal visuel.

10. Procédé selon l'une des revendications précédentes, **caractérisé en ce que** l'état serré du dispositif de frein de démarrage (7) est reconnu en fonction d'un écart réel qui devient inférieur à un écart de référence, mesuré dans la direction de l'axe longitudinal de l'attelage (1), d'un arrière (3) serré du dispositif de frein de démarrage (7) par rapport à un avant (27) de la remorque (5) .

11. Procédé selon la revendication 10, **caractérisé en ce que** cet écart réel est mesuré par un dispositif capteur (17, 20, 28) côté véhicule tracteur, notamment un dispositif capteur à ultrasons.

12. Procédé selon l'une des revendications précédentes, **caractérisé en ce que** l'état serré du dispositif de frein de démarrage (7) est reconnu en fonction d'une opération de freinage précédente du véhicule tracteur (2) et/ou une inclinaison de la voie de circulation (21) et/ou une direction d'inclinaison en référence à la direction de marche avant de l'attelage (1).

13. Procédé selon l'une des revendications précédentes, **caractérisé en ce que** l'état serré du dispositif de frein de démarrage (7) est reconnu en fonction d'un effet d'impulsion de la remorque (5) sur l'attache de remorque (4) .

14. Système d'assistance au conducteur (18), comprenant au moins un dispositif capteur (17, 20, 28) et une unité de commande (19) destinée à interpréter les informations du dispositif capteur (17, 20, 28), lequel est configuré pour mettre en œuvre un procédé selon l'une des revendications précédentes.

15. Véhicule (2) comprenant un système d'assistance au conducteur (18) selon la revendication 14.
